# EUROPEAN PATENT APPLICATION

(11) **EP 4 597 403 A1**
(43) Date of publication of application: **06.08.2025**
(21) Application number: 25155209.7
(22) Date of filing: 31.01.2025
(51) Int. Cl.: G06Q 30/0241

(54) **METHOD AND APPARATUS, ELECTRONIC DEVICE, AND STORAGE MEDIUM FOR PROCESSING RECOMMENDATION INFORMATION**

(30) Priority: 01.02.2024 CN 202410145175
(71) Applicant: Beijing Youzhuju Network Technology Co., Ltd., Beijing 101299 (CN)
(72) Inventor: SHAO, Wenwen, Beijing, 100028 (CN); WAN, Shilong, Beijing, 100028 (CN); XIONG, Zhaopeng, Beijing, 100028 (CN); NIE, Yuyang, Beijing, 100028 (CN); CHEN, Ziyang, Beijing, 100028 (CN); QI, Yufei, Beijing, 100028 (CN); SHENG, Mengxue, Beijing, 100028 (CN); ZHUO, Wei, Beijing, 100028 (CN); LIANG, Yaqin, Beijing, 100028 (CN); LIANG, Ming, Beijing, 100028 (CN); LI, Xin, Beijing, 100028 (CN); YU, Yang, Beijing, 100028 (CN); ZHANG, Xiaoguang, Beijing, 100028 (CN)
(74) Representative: Isarpatent

(57) **Abstract**

The present disclosure relates to the field of computer technologies, and discloses a method and apparatus, an electronic device, and a storage medium for processing recommendation information. The method includes: displaying (S101) a content document on a document page, where the content document includes a plurality of content document pages; acquiring (5102) target position information of recommendation information to be processed in the content document, where the target position information is determined based on a statistical analysis result of display durations of the content document pages; and processing (S103) the recommendation information to be processed on the document page based on the target position information, where the processing includes displaying or issuing a recommendation request. The method processes the recommendation information to be processed on the document page based on the target position information, which can ensure that the recommendation information to be processed is processed as required.

## Description

### FIELD

The present disclosure relates to the field of computer technologies, and in particular, to a method and apparatus, an electronic device, and a storage medium for processing recommendation information.

### BACKGROUND

Content documents under the same subject are generally displayed with a plurality of content document pages. In the display process of the content document pages, recommendation information is displayed between the content document pages. Therefore, the display of the content document involves the processing of the recommendation information.

### SUMMARY

In view of this, the present disclosure provides a method and apparatus, an electronic device, and a storage medium for processing recommendation information to solve the problem of recommendation information processing.

In a first aspect, the present disclosure provides a method for processing recommendation information, the method including:
displaying a content document on a document page, and the content document includes a plurality of content document pages;
acquiring target position information of recommendation information to be processed in the content document, and the target position information is determined based on a statistical analysis result of display durations of the content document pages; and
processing the recommendation information to be processed on the document page based on the target position information, and the processing includes displaying or issuing a recommendation request.

In a second aspect, the present disclosure provides an apparatus for processing recommendation information, the apparatus including:
a content document display module, configured to display a content document on a document page, and the content document includes a plurality of content document pages;
a target position information acquisition module, configured to acquire target position information of recommendation information to be processed in the content document, and the target position information is determined based on a statistical analysis result of display durations of the content document pages; and
a recommendation information processing module, configured to process the recommendation information to be processed on the document page based on the target position information, and the processing includes displaying or issuing a recommendation request.

In a third aspect, the present disclosure provides an electronic device, including: a memory and a processor, where the memory and the processor communicate with each other and are connected, computer instructions are stored in the memory, and the processor executes the computer instructions to execute the method for processing recommendation information according to the first aspect or any of its corresponding implementations.

In a fourth aspect, the present disclosure provides a computer-readable storage medium, where computer instructions are stored in the computer-readable storage medium, and the computer instructions causing a computer to execute the method recommendation information processing according to the first aspect or any of its corresponding implementations.

According to the method for processing recommendation information provided in the embodiment of the present disclosure, the content document is displayed on the document page, and the target position information of the recommendation information to be processed in the content document is acquired in real time during the display process of the content document pages. Since the target position information is determined based on the statistical analysis result of the display durations of the content document pages, it is ensured that the obtained target position information is closely related to the display durations of the content document pages, and adaptive adjustment of the target position information corresponding to the recommendation information to be processed is achieved. Based on this, the recommendation information to be processed on the document page is processed based on the target position information, which may ensure that the recommendation information to be processed is processed as required.

### BRIEF DESCRIPTION OF THE DRAWINGS

In order to more clearly illustrate the technical solutions in the specific implementations of the present disclosure or in the prior art, the drawings that need to be used in the description of the specific implementations or the prior art will be briefly described below. Obviously, the drawings in the following description are some implementations of the present disclosure. For those of ordinary skill in the art, other drawings may also be obtained based on these drawings without any creative effort.
FIG. 1 is a flowchart of a method for processing recommendation information according to an embodiment of the present disclosure;
FIG. 2 is a flowchart of an approach for determining target position information according to an embodiment of the present disclosure;
FIG. 3 is a schematic diagram of a content document page and recommendation information to be processed according to an embodiment of the present disclosure;
FIG. 4 is a flowchart of another approach for determining target position information according to an embodiment of the present disclosure;
FIG. 5 is a schematic diagram of another content document page and recommendation information to be processed according to an embodiment of the present disclosure;
FIG. 6 is a flowchart of still another approach for determining target position information according to an embodiment of the present disclosure;
FIG. 7 is a schematic diagram of still another content document page and recommendation information to be processed according to an embodiment of the present disclosure;
FIG. 8 is a block diagram of an apparatus for processing recommendation information according to an embodiment of the present disclosure; and
FIG. 9 is a schematic diagram of a hardware structure of an electronic device according to an embodiment of the present disclosure.

### DETAILED DESCRIPTION OF EMBODIMENTS

In order to make the objectives, technical solutions and advantages of the embodiments of the present disclosure clearer, the technical solutions in the embodiments of the present disclosure will be described clearly and comprehensively below with reference to the drawings in the embodiments of the present disclosure. Obviously, the described embodiments are part of the embodiments of the present disclosure, but not all of the embodiments. All other embodiments obtained by those of ordinary skill in the art based on the embodiments of the present disclosure without creative efforts fall within the protection scope of the present disclosure.

It can be understood that before using the technical solutions disclosed in the embodiments of the present disclosure, users should be informed of the types, use scope, use scenarios, etc. of personal information involved in the present disclosure in an appropriate manner in accordance with relevant laws and regulations, and the authorization of the users should be obtained.

For example, when receiving an active request from a user, a prompt message is sent to the user to explicitly prompt the user that the operation requested to be performed will require access to and use of the user's personal information. Thus, the user can choose whether to provide personal information to software or hardware such as an electronic device, an application, a server or a storage medium that performs the operations of the technical solutions of the present disclosure according to the prompt message.

As an optional but non-limiting implementation, the manner of sending the prompt message to the user in response to receiving the active request from the user may be, for example, a pop-up window, and the prompt message may be presented in the pop-up window in the form of text. In addition, the pop-up window may also carry a selection control for the user to select "agree" or "disagree" to provide personal information to the electronic device.

It can be understood that the above process of notifying and acquiring user authorization is only illustrative and does not constitute a limitation on the implementations of the present disclosure. Other methods that meet relevant laws and regulations may also be applied to the implementations of the present disclosure.

It can be understood that the data involved in the technical solutions (including but not limited to the data itself, the acquisition or use of the data) should comply with the requirements of corresponding laws, regulations and related provisions.

In the related technologies, the recommendation information is displayed in the content document at a fixed content document page interval. For example, if the first display of the recommendation information is on page 5, and the fixed content document page interval is 10 pages, then the second display of the recommendation information is on page 15, and the third display of the recommendation information is on page 25, and so on. Each recommendation information is separated by 10 content document pages. However, the display duration of each content document page is different, some are shorter and some are longer. This will lead to inconsistent time intervals between two adjacent pieces of recommendation information displayed at a fixed content document page interval, some are longer and some are shorter, resulting in large differences in display frequencies of the recommendation information.

Corresponding to the display of the recommendation information is the request for the recommendation information. In the related technologies, the recommendation information is delivered by the server to the client according to the request. For the client, a recommendation request is issued at intervals of a fixed content document page. Correspondingly, due to the inconsistency of the display duration of each content document page, the frequency of issuing the recommendation request varies greatly.

In the related technologies, the interaction between the client and the server is specifically as follows: the client displays the content document page and acquires a switching request for the content document page, so as to realize the switching of the currently displayed content document page. The client records the position where the last recommendation request was issued. In conjunction with the fixed content document page interval, if the current content document page reaches the position where the recommendation request needs to be issued, the recommendation request is sent to the server. Correspondingly, the server delivers the corresponding recommendation information, and records the display position of the recommendation information on the client. If the current content document page reaches the position where the recommendation information needs to be displayed, the recommendation information is displayed on the client. That is, for the client, the recommendation request is issued according to the fixed content document page interval, and the recommendation information is displayed according to the fixed content document page interval. For the server, the corresponding recommendation information is delivered according to the recommendation request.

As shown above, the manner of processing the recommendation information in the related technologies may lead to a large difference in the processing frequency of the recommendation information. Based on this, in the method for processing recommendation information provided in the embodiment of the present disclosure, the content document is displayed on the document page, and the target position information of the recommendation information to be processed in the content document is acquired in real time during the display process of the content document pages. Since the target position information is determined based on the statistical analysis result of the display durations of the content document pages, it is ensured that the obtained target position information is closely related to the display durations of the content document pages, and the adaptive adjustment of the target position information corresponding to the recommendation information to be processed is achieved. That is, the position information of the recommendation information to be processed in the content document is adjusted according to the real-time display situation of the content document pages, so as to ensure that the recommendation information to be processed can be processed as required.

According to the embodiment of the present disclosure, an embodiment of a method for processing recommendation information is provided. It should be noted that the steps shown in the flowcharts in the drawings may be executed in a computer system such as a set of computer-executable instructions. Although a logical order is shown in the flowchart, in some cases, the steps shown or described may be executed in an order different from that here.

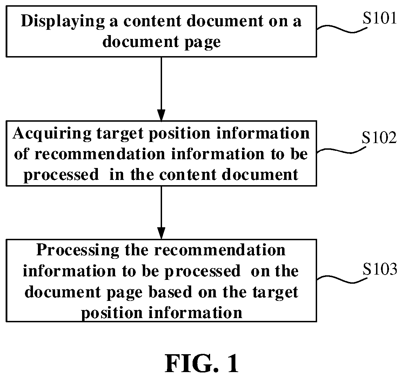

In this embodiment, a method for processing recommendation information is provided, which may be used in an electronic device, such as a mobile terminal such as a mobile phone, a tablet computer, etc. FIG. 1 is a flowchart of a method for processing recommendation information according to an embodiment of the present disclosure. As shown in FIG. 1, the flow includes the following steps:
Step S101: displaying a content document on a document page.

The content document includes a plurality of content document pages.

The document page is used to display the content document, and the content document includes a plurality of content document pages. The number of content document pages included in the content document is related to the number of words displayed on each page in the document page. If the number of words displayed on each page is larger, the fewer content document pages are included in the content document. If the number of words displayed on each page is smaller, the more content document pages are included in the content document. Since the sizes of display screens in different electronic devices are different, the number of words displayed on each page in the document page is affected.

Based on this, the number of content document pages included in the content document is related to actual situations, which is not limited here.

Step S102: acquiring target position information of recommendation information to be processed in the content document.

The target position information is determined based on a statistical analysis result of display durations of the content document pages.

The recommendation information to be processed is recommendation information that needs to be processed in the content document. The form of the recommendation information may be a picture, a video, etc., which is not limited here. The target position information of the recommendation information to be processed in the content document is used to indicate that the recommendation information to be processed is processed at the target position information, and the target position information is determined based on the statistical analysis result of the display durations of the content document pages. The statistical analysis result of the display durations of the content document pages may be an average display duration of each content document page, or a standard deviation of the display durations of the content document pages, etc., which is not limited here.

The statistical analysis result of the display durations of the content document pages is related to the current reading. For example, if the current reading starts from page 10 and the current content document page that is currently read is page 50, the display durations of the content document pages from page 10 to page 50 are statistically analyzed to obtain a corresponding statistical analysis result. That is, the obtained statistical analysis result is used to determine the target position information of the recommendation information to be processed in the content document.

For example, for the recommendation information to be processed, a fixed number of content document pages are between position information fed back by the server every time and position information fed back by the server last time. However, due to the difference in the display durations of the content document pages, the position information fed back by the server needs to be adjusted adaptively according to the statistical analysis result of the actual display duration to match the statistical analysis result.

In some optional implementations, the recommendation information to be processed includes optional display recommendation information and mandatory display recommendation information. The optional display recommendation information means that after the recommendation information to be processed is displayed on the content document page corresponding to the target position information, other content document pages may be displayed by switching through interaction with the content document page, i.e., the display of the optional display recommendation information may be skipped. The mandatory display recommendation information means that after the recommendation information to be processed is displayed on the content document page corresponding to the target position information, other content document pages may be switched and displayed after the preset duration corresponding to the recommendation information to be processed is displayed, i.e., the display of the mandatory display recommendation information cannot be skipped.

Step S103: processing the recommendation information to be processed on the document page based on the target position information.

The processing includes displaying or issuing a recommendation request.

After the target position information is determined, when the current content document page reaches the target position, the corresponding processing is performed on the recommendation information to be processed. The processing includes one of displaying or issuing a request. If the current content document page reaches the next page of page 9, i.e., an ad page, if the current processing is displaying, the corresponding recommendation information is displayed on the ad page; if the current processing is issuing a request, the corresponding content document is displayed on the ad page and the request is issued. For displaying, issuing the request does not affect the display of the content document page.

According to the method for processing recommendation information provided in this embodiment, the content document is displayed on the document page, and the target position information of the recommendation information to be processed in the content document is acquired in real time during the display process of the content document pages. Since the target position information is determined based on the statistical analysis result of the display durations of the content document pages, it is ensured that the obtained target position information is closely related to the display durations of the content document pages, and the adaptive adjustment of the target position information corresponding to the recommendation information to be processed is achieved. Based on this, the recommendation information to be processed on the document page is processed based on the target position information, which may ensure that the recommendation information to be processed is processed as required.

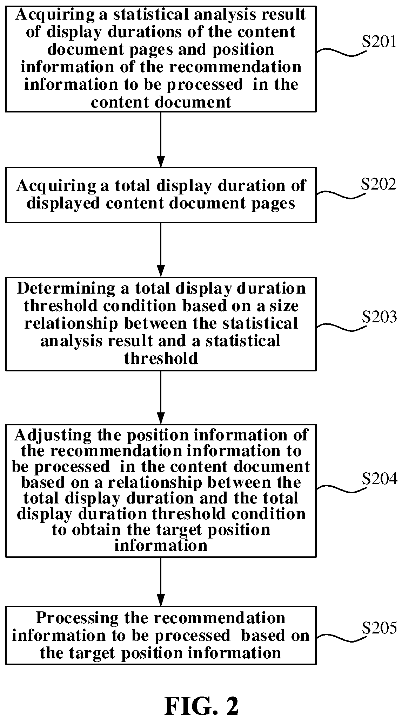

In this embodiment, a method for processing recommendation information is provided, which may be used in an electronic device, such as a mobile terminal such as a mobile phone, a tablet computer, etc. In this embodiment, an approach for determining the target position information in the method for processing recommendation information will be described in detail. Specifically, FIG. 2 is a flowchart of an approach for determining target position information according to an embodiment of the present disclosure. As shown in FIG. 2, the approach for determining the target position information includes the following steps:
Step S201: acquiring a statistical analysis result of display durations of the content document pages and position information of recommendation information to be processed in the content document.

The display duration of a content document page may indicate the continuous display duration of the content document page. For example, if the content document is displayed from page 5, the recording of the display duration is triggered at the beginning of the display. If the current content document page is page 20, the display duration of the content document page represents the display duration from page 5 to page 20. The statistical analysis result of the display durations of the content document pages may be the average display duration of each content document page, or other statistical analysis results, which is not limited here and is set according to actual requirements.

The recommendation information to be processed is recommendation information that will be processed. The position information of the recommendation information to be processed in the content document is located after the current content document page. The current content document page is the content document page that is currently displayed. The position information of the recommendation information to be processed in the content document may be set according to a fixed content document page interval. For example, if the position of the last recommendation information in the content document is page 1 and the fixed content document page interval is 10 pages, the position of the recommendation information to be processed in the content document is page 11.

The content document includes a plurality of content document pages. By acquiring a switching request for the current content document page, the current content document page is switched, that is, the content of the currently displayed content document page is implemented.

Step S202: acquiring a total display duration of displayed content document pages.

The displayed content document pages are content document pages between the current content document page and a document page corresponding to position information of the last recommendation information.

The position information of the last recommendation information is the position where the last recommendation information is processed, and the current content document page is the content document page that is currently displayed. For example, if the position where the last recommendation information is processed is page 11 of the content document, and the current content document page is page 15 of the content document, the displayed content document pages include the content document pages from page 11 to page 15. Correspondingly, the total display duration of the displayed content document pages represents the total display duration of the content document pages from page 11 to page 15.

The total display duration may be obtained by recording the display duration of each content document page and then accumulating; or may be obtained by recording the time stamp of each content document page and obtaining the time difference between two time stamps; and so on. Of course, the total display duration of the displayed content document pages may also be obtained in other ways.

Step S203: determining a total display duration threshold condition based on a size relationship between the statistical analysis result and a statistical threshold.

There may be one or more statistical thresholds. The setting of the statistical threshold is equivalent to dividing the statistical analysis result of the display duration into multiple situations, and each situation corresponds to a total display duration threshold condition. For example, if the statistical analysis result is the average display duration and the statistical threshold includes two thresholds, three situations are correspondingly divided for the statistical analysis result, that is, the average display duration is long, normal, and short. The statistical analysis result obtained in the above step S201 is compared with the statistical threshold in size, and the total display duration threshold condition corresponding to the obtained statistical analysis result is determined.

The total display duration threshold condition includes two meanings, which are a total duration threshold and a condition, respectively. Different total display duration threshold conditions correspond to different total duration thresholds and conditions. For example, if the total duration threshold includes 20 s and 180 s, the condition corresponding to 20 s is less than 20 s, and the condition corresponding to 180 s is greater than 180 s.

In step S204, the position information of the recommendation information to be processed in the content document is adjusted based on a relationship between the total display duration and the total display duration threshold condition to obtain the target position information.

The total display duration obtained in the above step S202 is compared with the total display duration threshold condition to determine whether the total display duration threshold condition is satisfied, and the position information of the recommendation information to be processed in the content document is adjusted according to the comparison result. The position information of the recommendation information to be processed in the content document may be adjusted in a direction close to the current content document page, or in a direction away from the current content document page, or may be unchanged.

After the position information of the recommendation information to be processed in the content document is adjusted, adjusted position information is obtained. The adjusted position information may be directly used as the target position information, or the target position information may be obtained based on the adjusted position information in combination with other constraints. Other constraints include but are not limited to a minimum content document page interval between adjacent pieces of recommendation information, and are set according to actual requirements, which are not limited here.

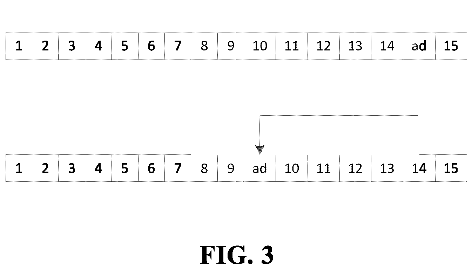

As shown in FIG. 3, the current content document page is page 7, and the position information of the recommendation information to be processed (ad) is the next page of page 14. After the analysis in the above steps, it is determined that the position of the recommendation information to be processed needs to be moved forward, i.e., the adjusted position information corresponding to the recommendation information to be processed is the next page of page 9.

Step S205: processing the recommendation information to be processed based on the target position information.

After the target position information is determined, when the current content document page reaches the target position, the corresponding processing is performed on the recommendation information to be processed. The processing includes one of displaying or issuing a request. As shown in FIG. 3, if the current content document page reaches the next page of page 9, i.e., an ad page, if the current processing is displaying, the corresponding recommendation information is displayed on the ad page; if the current processing is issuing a request, the corresponding content document is displayed on the ad page and the request is issued. For displaying, issuing the request does not affect the display of the content document page.

According to the method for processing recommendation information provided in this embodiment, the position information of the recommendation information to be processed in the content document is adjusted in real time according to the relationship between the total display duration and the total display duration threshold condition, so as to obtain the target position information of the recommendation information to be processed. After the target position information is obtained, the recommendation information to be processed is processed based on the target position information. The method performs real-time adjustment on the position information of the recommendation information to be processed according to the statistical analysis result of the display duration and the total display duration of the displayed content document pages, so as to obtain the target position information adapted to the current display duration, which improves the accuracy of the processing of the recommendation information to be processed.

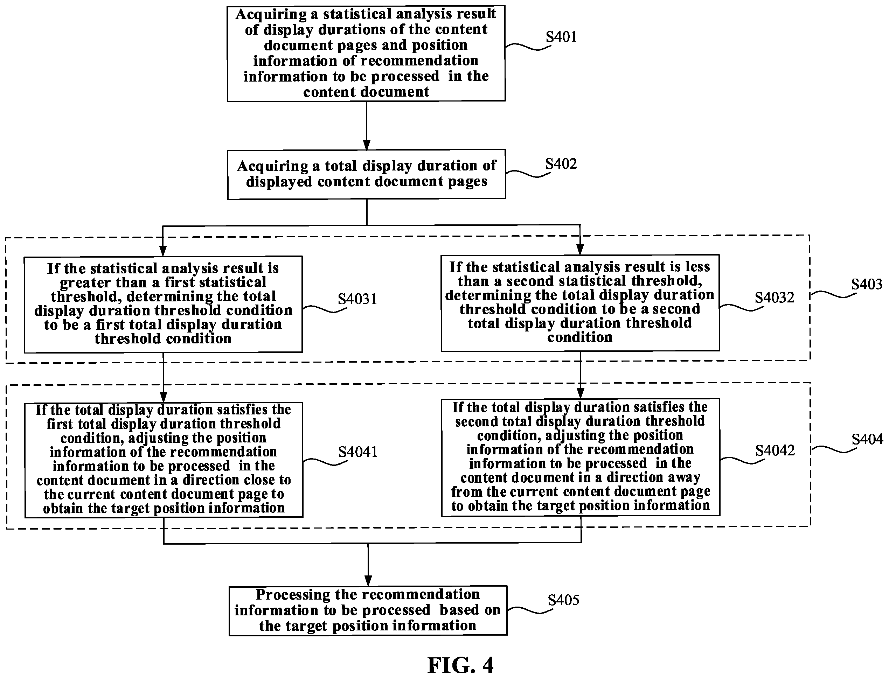

In this embodiment, a method for processing recommendation information is provided, which may be used in an electronic device, such as a mobile terminal such as a mobile phone, a tablet computer, etc. In this embodiment, a determination method of the target position information in the method for processing recommendation information will be described in detail. Specifically, FIG. 4 is a flowchart of an approach for determining target position information according to an embodiment of the present disclosure. As shown in FIG. 4, the approach for determining the target position information includes the following steps:
Step S401: acquiring a statistical analysis result of display durations of the content document pages and position information of recommendation information to be processed in the content document.

The content document includes a plurality of content document pages. For details, please refer to the description of step S201 in the embodiment shown in FIG. 2, which will not be repeated here.

Step S402: acquiring a total display duration of displayed content document pages.

The displayed content document pages are content document pages between the current content document page and a document page corresponding to position information of the last recommendation information. For details, please refer to the description of step S202 in the embodiment shown in FIG. 2, which will not be repeated here.

Step S403: determining a total display duration threshold condition based on a size relationship between the statistical analysis result and a statistical threshold.

Specifically, the above step S403 includes:
Step S4031: if the statistical analysis result is greater than a first statistical threshold, determining the total display duration threshold condition to be a first total display duration threshold condition.
Step S4032: if the statistical analysis result is less than a second statistical threshold, determining the total display duration threshold condition to be a second total display duration threshold condition.

The first statistical threshold is greater than the second statistical threshold.

The statistical threshold includes a first statistical threshold and a second statistical threshold. If the statistical analysis result is greater than the first statistical threshold, it is determined that the first total display duration threshold condition needs to be used for subsequent analysis. If the statistical analysis result is less than the second statistical threshold, it is determined that the second total display duration threshold condition needs to be used for subsequent analysis.

In some optional implementations, if the processing is displaying, the above step S403 includes:
Step a1: acquiring a display identifier of the recommendation information to be processed, and the display identifier is used to indicate that the recommendation information to be processed is optional display recommendation information or mandatory display recommendation information.
In step a2, if the statistical analysis result is greater than the first statistical threshold and the recommendation information to be processed is the mandatory display recommendation information, the total display duration threshold condition is determined to be a first display duration threshold in the first total display duration threshold condition.
In step a3, if the statistical analysis result is greater than the first statistical threshold and the recommendation information to be processed is the optional display recommendation information, the total display duration threshold condition is determined to be a second display duration threshold in the first total display duration threshold condition, and the second display duration threshold is less than the first display duration threshold.

The optional recommendation information means that the recommendation information may be skipped through a switching request after being displayed, and the mandatory recommendation information means that the recommendation information can be switched through the switching request only after a target duration is displayed. The optional recommendation information and the mandatory recommendation information are distinguished by the display identifier of the recommendation information to be processed, i.e., the server delivers the corresponding display identifier while delivering the recommendation information.

In some optional implementations, the display identifier may also represent the target duration. For example, if the display identifier N=0, it means that the recommendation information is the optional recommendation information. If the display identifier N=5, it means that the recommendation information is the mandatory recommendation information and the target duration corresponding to the mandatory recommendation information is 10 s. Of course, the target duration may also be represented in other ways, which is not limited here.

As shown above, when the statistical analysis result is greater than the first statistical threshold, it corresponds to the first total display duration threshold condition. On this basis, a further subdivision is performed. If the recommendation information to be processed is the optional display recommendation information, the total display duration threshold condition is determined to be the first display duration threshold in the first total display duration threshold condition. If the recommendation information to be processed is the mandatory display recommendation information, the total display duration threshold condition is determined to be the second display duration threshold in the first total display duration threshold condition.

The first total display duration threshold condition is used to constrain the display position of the recommendation information to be processed. Based on this, different display duration thresholds are set for the optional display recommendation information and the mandatory display recommendation information. Specifically, the optional display recommendation information corresponds to the second display duration threshold, and the mandatory display recommendation information corresponds to the first display duration threshold, where the second display duration threshold is less than the first display duration threshold. Since the optional display recommendation information may be displayed according to requirements, the corresponding second display duration threshold is set to be less than the first display duration threshold, so as to improve the display frequency of the optional display recommendation information.

The mandatory display recommendation information and the optional display recommendation information both correspond to different display duration thresholds to satisfy the display of different types of recommendation information.

In step S404, the position information of the recommendation information to be processed in the content document is adjusted based on the relationship between the total display duration and the total display duration threshold condition to obtain the target position information.

Specifically, the above step S404 includes:
In step S4041, if the total display duration satisfies the first total display duration threshold condition, the position information of the recommendation information to be processed in the content document is adjusted in a direction close to the current content document page to obtain the target position information.

When the total display duration satisfies the first total display duration threshold condition, the position information of the recommendation information to be processed in the content document is moved forward to obtain the target position information. The interval of moving forward may be a preset content document page interval, such as 3 pages, or 5 pages, etc., and the specific value is set according to actual requirements.

As shown in FIG. 3, when the total display duration satisfies the first total display duration threshold condition, the recommendation information to be processed is moved forward from the next page of page 14 to the next page of page 9.

In some optional implementations, the above step S4041 includes:
In step b1, if the total display duration satisfies the first total display duration threshold condition, the position information of the recommendation information to be processed in the content document is adjusted in the direction close to the current content document page by the preset content document page interval to obtain the adjusted position information.
In step b2, if the first content document page interval between the adjusted position information and the position information of the last recommendation information is less than the first content document page interval threshold, the position information, which is separated from the position information of the last recommendation information by the first content document page interval threshold, is determined as the target position information.

After the position information of the recommendation information to be processed is moved forward by the preset content document page interval, the adjusted position information is obtained. The position information of the last recommendation information is acquired, and the first content document page interval between the two pieces of position information is obtained in combination with the adjusted position information.

The first content document page interval threshold is used to constrain the minimum interval between the position information of two adjacent pieces of recommendation information. If the first content document page interval is less than the first content document page interval threshold, the position information, which is separated from the position information of the last recommendation information by the first content document page interval threshold, is determined as the target position information.

For example, if the position information of the last recommendation information is on page 5 of the content document and the first content document page interval threshold is 5 pages, and if the adjusted position information is on page 12 of the content document, since the adjusted position information is 7 pages away from the position information of the last recommendation information, the adjusted position information is directly determined as the target position information. If the adjusted position information is on page 8 of the content document, since the adjusted position information is 3 pages away from the position information of the last recommendation information, which is less than the first content document page interval threshold, page 10 of the content document is determined as the target position information.

After the recommendation information to be processed is moved forward, the first content document page interval threshold is used to limit the minimum document page interval threshold, so as to avoid frequent processing of the recommendation information.

In step S4042, if the total display duration satisfies the second total display duration threshold condition, the position information of the recommendation information to be processed in the content document is adjusted in a direction away from the current content document page to obtain the target position information.

After the total display duration satisfies the second total display duration threshold condition, it means that the position information of the recommendation information to be processed in the content document needs to be moved backward at present to obtain the target position information.

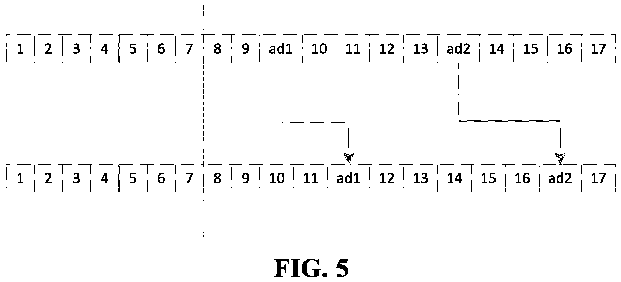

For example, as shown in FIG. 5, the current document content page is page 7, the first recommendation information page ad1 is on the next page of page 9, and after real-time analysis and processing, the position of the first recommendation information page ad1 needs to be moved back to the next page of page 11. Further, the second recommendation information page ad2 is on the next page of page 13, and after real-time analysis and processing, the position of the second recommendation information page ad2 needs to be moved back to page 16.

In some optional implementations, the above step S4042 includes:
step c1, if the total display duration satisfies the second total display duration threshold condition, acquiring a second content document page interval between the current document content page and the position information of the recommendation information to be processed in the content document; and
step c2, if the second content document page interval is less than a second content document page interval threshold, adjusting the position information of the recommendation information to be processed in the content document in a direction away from the current content document page by a preset content document page interval to obtain the target position information.

When the total display duration satisfies the second total display duration threshold condition, the second content document page interval between the current document page and the position information of the recommendation information to be processed in the content document is acquired. At this time, the current content document page has not reached the position information of the recommendation information to be processed in the content document, and accordingly, it takes a certain time from the current content document page to the position of the recommendation information to be processed. If the second content document page interval is less than the second content document page interval threshold, it means that the current content document page is about to reach the position of the recommendation information to be processed, and accordingly, the time is shorter. Therefore, the position information of the recommendation information to be processed needs to be moved backward. If the second content document page interval is greater than or equal to the second content document page interval threshold, it means that there are still a certain number of content document pages between the current content document page and the position of the recommendation information to be processed, and the position of the recommendation information to be processed can be kept unchanged first.

When the total display duration satisfies the second total display duration threshold condition, the backward movement processing is constrained by the second content document page interval threshold. Only when the second content document page interval is less than the second content document page interval threshold, the position information of the recommendation information to be processed in the content document is moved backward, which avoids frequent processing of the recommendation information.

In step S405, the recommendation information to be processed is processed based on the target position information. For details, please refer to the description of step S205 in the embodiment shown in FIG. 2, which will not be repeated here.

In the method for processing recommendation information provided in this embodiment, different total display duration threshold conditions are set for different statistical analysis results, so that the set total display duration threshold conditions may meet the requirements of statistical analysis. When the total display duration satisfies the first total display duration threshold condition, it means that the recommendation information to be processed needs to be processed in advance. Based on this, the position information of the recommendation information to be processed in the content document is moved forward to ensure that the recommendation information to be processed can be processed quickly. When the total display duration satisfies the second total display duration threshold condition, it means that the recommendation information to be processed needs to be processed later. Based on this, the position information of the recommendation information to be processed in the content document is moved backward to ensure that the recommendation information to be processed can be processed later.

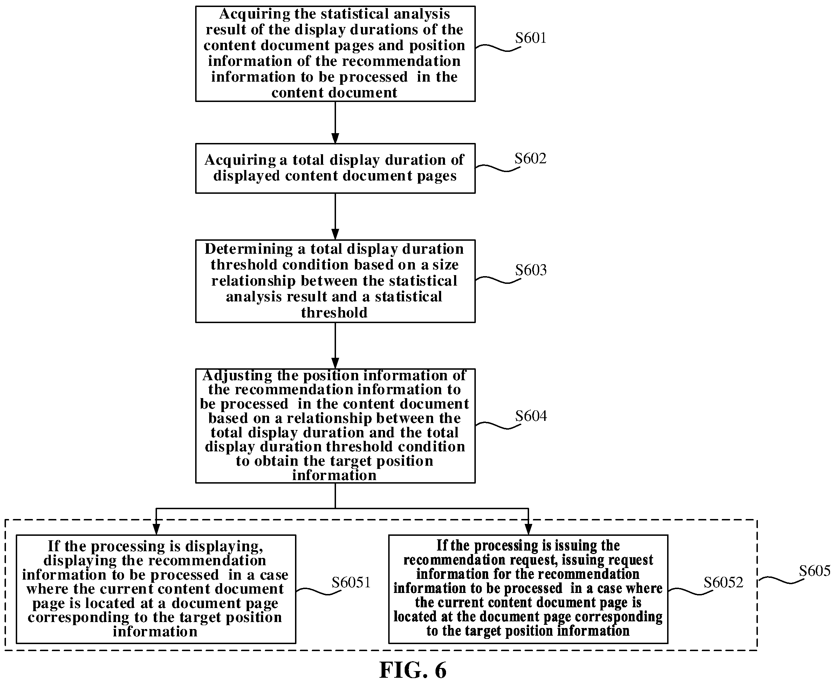

In this embodiment, a method for processing recommendation information is provided, which may be used in an electronic device, such as a mobile terminal such as a mobile phone, a tablet computer, etc. In this embodiment, an approach for determining the target position information in the method for processing recommendation information will be described in detail. Specifically, FIG. 6 is a flowchart of an approach for determining target position information according to an embodiment of the present disclosure. As shown in FIG. 6, the approach for determining the target position information includes the following steps:
Step S601: acquiring a statistical analysis result of display durations of the content document pages and position information of recommendation information to be processed in the content document.

The content document includes a plurality of content document pages. For details, please refer to the description of step S201 in the embodiment shown in FIG. 2, which will not be repeated here.

Step S602: acquiring a total display duration of displayed content document pages.

The displayed content document pages are content document pages between the current content document page and a document page corresponding to position information of the last recommendation information. For details, please refer to the description of step S202 in the embodiment shown in FIG. 2, which will not be repeated here.

In step S603, a total display duration threshold condition is determined based on a size relationship between the statistical analysis result and a statistical threshold. For details, please refer to the description of step 5403 in the embodiment shown in FIG. 4, which will not be repeated here.

In step S604, position information of the recommendation information to be processed in the content document is adjusted based on a relationship between the total display duration and the total display duration threshold condition to obtain the target position information. For details, please refer to the description of step 5404 in the embodiment shown in FIG. 4, which will not be repeated here.

In step S605, the recommendation information to be processed is processed based on the target position information.

Specifically, the above step S605 includes:
In step S6051, if the processing is displaying, the recommendation information to be processed is displayed in a case wherein the current content document page is located at a document page corresponding to the target position information.

After the target position information of the recommendation information to be processed is determined, whether the current content document page is located at the target position information is monitored. If the current content document page is located at the target position information and the target position information corresponds to a display position of the recommendation information to be processed, the recommendation information to be processed is displayed on the current content document page.

In some optional implementations, the above step S6051 includes the following steps.

In step d1, a display identifier of the recommendation information to be processed is acquired, and the display identifier is used for indicating that the recommendation information to be processed is optional display recommendation information or mandatory display recommendation information.

In step d2, if the recommendation information to be processed is the optional display recommendation information, a first switching request for the current content document page is acquired.

In step d3, a first content document page corresponding to the first switching request is displayed.

For the display of the recommendation information to be processed, different interactive displays need to be performed for the least the optional display recommendation information and the mandatory display recommendation information. If the recommendation information to be processed is the optional display recommendation information, it means that the recommendation information to be processed may be directly switched after being displayed. That is, the recommendation information to be processed is displayed on the current content document page, and after the first switching request for the current content document page is acquired, the first content document page corresponding to the first switching request is displayed.

In the display processing, it is determined, in combination with the display identifier of the recommendation information to be processed, whether the recommendation information to be processed is the optional display recommendation information or the mandatory display recommendation information. The recommendation information to be processed is displayed in combination with different display identifiers, which ensures the display of different types of recommendation information to be processed.

In some optional implementations, the above step S6051 further includes the following steps:

In step d4, if the recommendation information to be processed is the mandatory display recommendation information, a target display duration of the recommendation information to be processed is acquired.

In step d5, the recommendation information to be processed is displayed on the current content document page based on the target display duration.

In step d6, a second switching request for the current content document page is acquired in the case wherein an actual display duration of the recommendation information to be processed is greater than or equal to the target display duration.

In step d7, a second content document page corresponding to the second switching request is displayed.

If the recommendation information to be processed is the mandatory display recommendation information, the recommendation information to be processed is displayed on the current content document page. The target display duration of the recommendation information to be processed is acquired, and the recommendation information to be processed is displayed on the current content document page according to the target display duration.

When the recommendation information to be processed is displayed, the counting of the actual display duration of the recommendation information to be processed is triggered. If the actual display duration is greater than or equal to the target display duration, after the second switching request for the current content document page is acquired, the second content document page corresponding to the second switching request is displayed. In the case wherein the actual display duration of the recommendation information to be processed does not reach the target display duration, even if the second switching request is acquired, the recommendation information to be processed is still displayed on the current display page, and the switching of the display content cannot be implemented.

For the recommendation information to be processed of the mandatory display recommendation information, the second switching request for the current content document page may be acquired only when the actual display duration of the recommendation information to be processed reaches the target display duration, so as to ensure that the mandatory display recommendation information satisfies the corresponding target display duration.

In step S6052, if the processing is issuing the recommendation request, request information for the recommendation information to be processed is issued in the case wherein the current content document page is located at the document page corresponding to the target position information.

If the processing of the recommendation information to be processed is issuing the recommendation request, in the case wherein the current content document page is located at the document page corresponding to the target position information, the content of the corresponding document page is displayed on the current content document page, and the request information for the recommendation information to be processed is issued. Issuing the recommendation request does not affect the display of the current content document page.

The recommendation request is sent by the client to the server, and the server delivers the corresponding recommendation information after receiving the recommendation request. As shown above, the recommendation information includes the optional recommendation information and the mandatory recommendation information, and the optional recommendation information and the mandatory recommendation information are delivered in turn in the server. If the first delivery is the optional recommendation information, the second delivery is the mandatory recommendation information, the third delivery is the optional recommendation information, and so on.

It should be noted that the content document of the client may be preset with an initial position for issuing a request and a document page interval corresponding to the request. That is, when the content document starts to be displayed, the initial position information of each recommendation request is preset. Subsequently, in the display process of each content document page, the position for issuing the next recommendation request corresponding to the next recommendation information is adjusted in real time through the above method for processing recommendation information.

As shown above, the server delivers the recommendation information according to the request. The position of the recommendation information delivered by the server in the content document is separated from the position of the issued recommendation request by a fixed document page, that is, after the recommendation request is issued, the display position of the corresponding recommendation information is determined. In the display process of the content document page, the display position of the next recommendation information corresponding to the next recommendation information is adjusted in real time through the above method for processing recommendation information.

In the method for processing recommendation information provided in this embodiment, the processing of the recommendation information to be processed includes displaying and issuing the recommendation request, and the recommendation information to be processed is processed accordingly for the two different types of processing.

As shown above, the processing of the recommendation information to be processed includes displaying and issuing a request. Based on this, the position information of the recommendation information to be processed in the content document includes a display position of the recommendation information to be processed and a position where the recommendation information to be processed issues a request. While switching the current content document page, the method for processing recommendation information provided in the embodiment of the present disclosure is triggered, and the position information of the recommendation information to be processed is adjusted in real time. Specifically, the position information includes a position where the recommendation information to be processed issues a request and a display position of the recommendation information to be processed.

As an optional implementation of the embodiment of the present disclosure, the current content document page is page 7, and when a switching operation of page 7 is triggered, the display position of the recommendation information is determined by the method for processing recommendation information provided in the embodiment of the present disclosure. Specifically, if the average display duration of each page of the content document is greater than 36S, if the current content document page exceeds 180 s from the display of the last mandatory recommendation information, and if the current content document page is separated from the display position of the next mandatory recommendation information by more than 3 content document pages, the display position of the next mandatory recommendation information is moved forward by 3 content document pages. If the current content document page exceeds 90 s from the display of the last optional recommendation information, and if the current content document page is separated from the display position of the next mandatory recommendation information by more than 3 content document pages, the display position of the next optional recommendation information is moved forward by 3 content document pages.

If the average display duration of each page of the content document is less than 5 s, if the current content document page is less than 20 s from the display of the last mandatory recommendation information, and if the current content document page is separated from the display position of the next mandatory recommendation information by 3 content document pages, the display position of the next mandatory recommendation information is moved backward by 3 content document pages. If the current content document page is less than 20 s from the display of the last optional recommendation information, and if the current content document page is separated from the display position of the next mandatory recommendation information by 3 content document pages, the display position of the next optional recommendation information is moved backward by 3 content document pages.

When the position of the recommendation information is moved forward or backward, it also needs to be ensured that the display position or the request issuing position of two adjacent pieces of recommendation information is at least 5 content document pages apart.

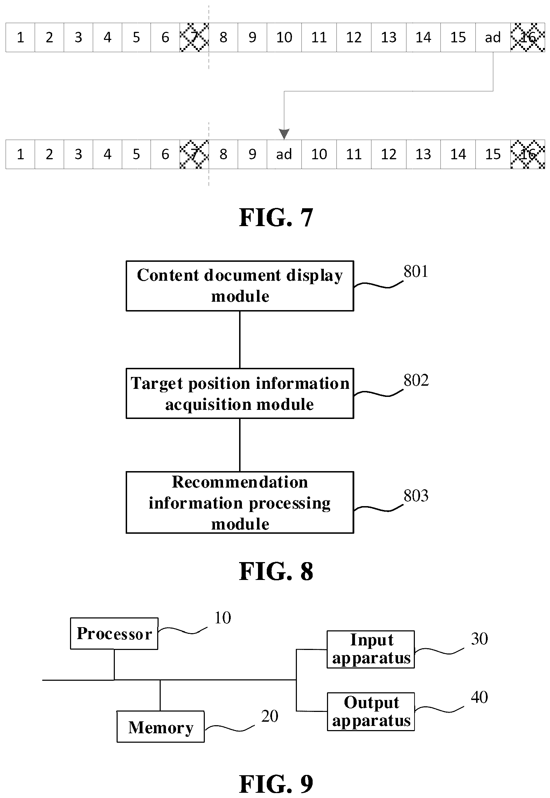

As shown in FIG. 7, the current content document page is page 7 and the current content document page is a document page corresponding to the current recommendation request issued. The position corresponding to the next recommendation request is page 16, and the display position of the next recommendation information is on the next page of page 15. After the processing in the above manner, it is determined in real time that the display position of the next recommendation information is on the next page of page 9. Therefore, the display position of the next recommendation information is moved forward to the next page of page 9.

As another optional implementation of the embodiment of the present disclosure, the current content document page is page 7, and when a switching operation of page 7 is triggered, the position for issuing the recommendation request of the recommendation information is determined by the method for processing recommendation information provided in the embodiment of the present disclosure. Specifically, if the average display duration of each page of the content document is greater than 36 s, if the current content document page exceeds 180 s from the position of the last recommendation request, and if the current content document page is separated from the position of the next recommendation request by more than 3 content document pages, the position of the next recommendation request is moved forward by 3 content document pages.

If the average display duration of each page of the content document is less than 5 s, if the current content document page is less than 20 s from the position of the last recommendation request, and if the current content document page is separated from the position of the next recommendation request by 3 content document pages, the position of the next recommendation request is moved backward by 3 content document pages.

As a specific application example of the embodiment of the present disclosure, the content document is a novel, the content document pages are article pages of the novel, and the recommendation information is an advertisement. After a novel application is triggered, the article page that was read last time is displayed. Through interaction with the article page, the switching of the article page is implemented. In the display process of the article pages of the novel, the display and request of the advertisement are involved. Correspondingly, the display position and the request issuing position of the advertisement are involved. The approaches for determining the display position and the request issuing position of the advertisement are similar, and the display position of the advertisement is taken as an example for description in this embodiment. If in the current display process of the novel, the display position of the last advertisement is on page 10, and the position of the next advertisement delivered by a server corresponding to the novel application is on page 20. In the display process of the article pages of the novel, the average display duration of the article pages that have been displayed at this time is counted. If the average display duration is greater than a preset value, it means that the display duration of each page is long. In this case, the duration between the current time and the last advertisement is analyzed. If the duration is greater than a preset duration, the display position of the next advertisement needs to be moved forward, and can be moved to page 17. If the average display duration is less than the preset value, it means that the display duration of each page is short. In this case, the duration between the current time and the last advertisement is analyzed. If the duration is less than the preset value and is about to reach page 20, the display position of the next advertisement needs to be moved backward, and can be moved to page 23.

For the specific approaches for determining the display position and the request issuing position of the advertisement, reference may be made to the specific description of the above embodiments, which will not be repeated here.

In this embodiment, an apparatus for processing recommendation information is further provided. The apparatus is used to implement the above embodiments and preferred implementations, and the description of which has been made will not be repeated. As used below, the term "module" may be a combination of software and/or hardware for implementing a predetermined function. Although the apparatus described in the following embodiments is preferably implemented in software, the implementation of hardware, or a combination of software and hardware, is also possible and contemplated.

This embodiment provides an apparatus for processing recommendation information, as shown in FIG. 8, including:
a content document display module 801, configured to display a content document on a document page, where the content document includes a plurality of content document pages.

A target position information acquisition module 802 is configured to acquire target position information of recommendation information to be processed in the content document, where the target position information is determined based on a statistical analysis result of display durations of the content document pages.

A recommendation information processing module 803 is configured to process the recommendation information to be processed on the document page based on the target position information, where the processing includes displaying or issuing a recommendation request.

In some optional implementations, the recommendation information to be processed includes: optional display recommendation information or mandatory display recommendation information.

In some optional implementations, the target position information acquisition module 802 includes:
an information acquisition module, configured to acquire the statistical analysis result of the display durations of the content document pages and position information of the recommendation information to be processed in the content document, where the content document includes a plurality of content document pages;
a duration acquisition module, configured to acquire a total display duration of displayed content document pages, where the displayed content document pages are content document pages between a current content document page and a document page corresponding to position information of the last recommendation information;
a condition determination module, configured to determine a total display duration threshold condition based on a size relationship between the statistical analysis result and a statistical threshold; and
a position adjustment module, configured to adjust the position information of the recommendation information to be processed in the content document based on a relationship between the total display duration and the total display duration threshold condition to obtain the target position information.

In some optional implementations, the condition determination module includes:
a first condition determination unit, configured to: if the statistical analysis result is greater than a first statistical threshold, determine the total display duration threshold condition to be a first total display duration threshold condition; and
a second condition determination unit, configured to: if the statistical analysis result is less than a second statistical threshold, determine the total display duration threshold condition to be a second total display duration threshold condition, where the first statistical threshold is greater than the second statistical threshold.

In some optional implementations, the position adjustment module includes:
a first adjustment unit, configured to: if the total display duration satisfies the first total display duration threshold condition, adjust the position information of the recommendation information to be processed in the content document in a direction close to the current content document page to obtain the target position information; and
a second adjustment unit, configured to: if the total display duration satisfies the second total display duration threshold condition, adjust the position information of the recommendation information to be processed in the content document in a direction away from the current content document page to obtain the target position information.

In some optional implementations, the first adjustment unit includes:
a first adjustment subunit, configured to: if the total display duration satisfies the first total display duration threshold condition, adjust the position information of the recommendation information to be processed in the content document in the direction close to the current content document page by a preset content document page interval to obtain adjusted position information; and
a first position determination subunit, configured to: if a first content document page interval between the adjusted position information and position information of the last recommendation information is less than a first content document page interval threshold, determine position information, which is separated from the position information of the last recommendation information by the first content document page interval threshold, as the target position information.

In some optional implementations, the second adjustment unit includes:
an interval acquisition subunit, configured to: if the total display duration satisfies the second total display duration threshold condition, acquire a second content document page interval between the current document content page and the position information of the recommendation information to be processed in the content document.

A second adjustment subunit is configured to: if the second content document page interval is less than a second content document page interval threshold, adjust the position information of the recommendation information to be processed in the content document in a direction away from the current content document page by the preset content document page interval to obtain the target position information.

In some optional implementations, the information processing module includes:
a display unit, configured to: if the processing is displaying, display the recommendation information to be processed in the case where the current content document page is located at the document page corresponding to the target position information; and
a request unit, configured to: if the processing is issuing the recommendation request, issue request information for the recommendation information to be processed in the case where the current content document page is located at the document page corresponding to the target position information.

In some optional implementations, the display unit includes:
a display identifier acquisition subunit, configured to acquire a display identifier of the recommendation information to be processed, where the display identifier is used for indicating that the recommendation information to be processed is the optional display recommendation information or the mandatory display recommendation information; and
a first switching request acquisition subunit, configured to: if the recommendation information to be processed is the optional display recommendation information, acquire a first switching request for the current content document page.

A first display subunit, configured to display a first content document page corresponding to the first switching request.

In some optional implementations, the display unit further includes:
a display duration acquiring subunit, configured to acquire a target display duration of the recommendation information to be processed if the recommendation information to be processed is the mandatory display recommendation information;
a second display subunit, configured to display the recommendation information to be processed on the current content document page based on the target display duration;
a second switching request acquiring subunit, configured to acquire a second switching request for the current content document page if an actual display duration of the recommendation information to be processed is greater than or equal to the target display duration; and
a third display subunit, configured to display a second content document page corresponding to the second switching request.

In some optional implementations, if the processing is displaying, the condition determination module includes:
a display identifier acquiring unit, configured to acquire a display identifier of the recommendation information to be processed, where the display identifier is used for indicating that the recommendation information to be processed is the optional display recommendation information or the mandatory display recommendation information;
a first duration threshold determining unit, configured to determine the total display duration threshold condition to be a first display duration threshold in the first total display duration threshold condition if the statistical analysis result is greater than the first statistical threshold and the recommendation information to be processed is the mandatory display recommendation information; and
a second duration threshold determining unit, configured to determine the total display duration threshold condition to be a second display duration threshold in the first total display duration threshold condition if the statistical analysis result is greater than the first statistical threshold and the recommendation information to be processed is the optional display recommendation information, where the second display duration threshold is less than the first display duration threshold.

The apparatus for processing recommendation information in this embodiment is presented in the form of functional units. The units herein refer to an Application Specific Integrated Circuit (ASIC) circuit, a processor and a memory that execute one or more software or fixed programs, and/or other devices that can provide the above functions.

Further functional descriptions of the above modules and units are the same as those of the above corresponding embodiments, and will not be repeated here.

The embodiments of the present disclosure further provide an electronic device having the above apparatus for processing recommendation information shown in FIG. 8.

Please refer to FIG. 9, which is a schematic structural diagram of an electronic device according to an optional embodiment of the present disclosure. As shown in FIG. 9, the electronic device includes: one or more processors 10, a memory 20, and interfaces for connecting various components, including a high-speed interface and a low-speed interface. Various components communicate with each other through different buses and may be installed on a common motherboard or in other manners as required. The processor may process instructions executed within the electronic device, including instructions stored in the memory or on the memory to display graphic information of a User Interface (GUI) on an external input/output device (such as a display device coupled to the interface). In some optional implementations, if required, multiple processors and/or multiple buses may be used together with multiple memories and multiple memories. Similarly, multiple electronic devices may be connected, and each device provides part of necessary operations (for example, as a server array, a group of blade servers, or a multi-processor system). In FIG. 9, one processor 10 is taken as an example.

The processor 10 may be a central processing unit, a network processor, or a combination thereof. The processor 10 may further include a hardware chip. The hardware chip may be an Application Specific Integrated Circuit (ASIC), a programmable logic device, or a combination thereof. The programmable logic device may be a complex programmable logic device, a field programmable gate array, a generic array logic, or any combination thereof.

The memory 20 stores instructions executable by at least one processor 10, to enable the at least one processor 10 to execute the method shown in the above embodiments.

The memory 20 may include a program storage region and a data storage region, where the program storage region may store an operating system and applications required for at least one function; and the data storage region may store data created according to the use of the electronic device, etc. In addition, the memory 20 may include a high-speed random-access memory, and may also include a non-transitory memory, such as at least one magnetic disk storage device, a flash memory device, or other non-transitory solid-state storage devices. In some optional implementations, the memory 20 may optionally include a memory provided remotely relative to the processor 10, and these remote memories may be connected to the electronic device through a network. Examples of the network include, but are not limited to, the Internet, an intranet, a local area network, a mobile communication network, and a combination thereof.

The memory 20 may include a volatile memory, such as a random-access memory; the memory may also include a non-volatile memory, such as a flash memory, a hard disk or a solid-state disk; and the memory 20 may also include a combination of the above-mentioned types of memories.

The electronic device further includes an input apparatus 30 and an output apparatus 40. The processor 10, the memory 20, the input apparatus 30 and the output apparatus 40 may be connected by a bus or other means, and the connection by a bus is taken as an example in FIG. 9.

The input apparatus 30 may receive input digital or character information, and generate key signal input related to user settings and function control of the electronic device, such as a touchscreen, a keypad, a mouse, a trackpad, a touchpad, an indicator rod, one or more mouse buttons, a trackball, a joystick, and the like. The output apparatus 40 may include a display device, an auxiliary lighting apparatus (for example, an LED), a tactile feedback apparatus (for example, a vibration motor), etc. The above-mentioned display device includes but is not limited to a liquid crystal display, a light-emitting diode, a display and a plasma display. In some optional implementations, the display device may be a touchscreen.

The embodiment of the present disclosure further provides a computer-readable storage medium, the above method according to the embodiment of the present disclosure may be implemented in hardware, firmware, or may be implemented as a computer code that can be recorded in a storage medium, or may be implemented as a computer code originally stored in a remote storage medium or a non-transitory machine-readable storage medium and downloaded through a network and to be stored in a local storage medium, so that the method described herein may be stored in such software processing on a storage medium using a general-purpose computer, a dedicated processor, or programmable or dedicated hardware. The storage medium may be a magnetic disk, an optical disk, a read-only memory, a random-access memory, a flash memory, a hard disk or a solid-state disk, etc.; further, the storage medium may also include a combination of the above-mentioned types of memories. It may be understood that a computer, a processor, a microprocessor controller or programmable hardware includes a storage component capable of storing or receiving software or computer code, and when the software or computer code is accessed and executed by the computer, the processor or the hardware, the method shown in the above embodiments is implemented.

Although the embodiments of the present disclosure are described with reference to the drawings, those skilled in the art may make various modifications and variations without departing from the scope of the present disclosure, and such modifications and variations fall within the scope defined by the appended claims.

## Claims

1. A method for processing recommendation information, comprising:
displaying (S101) a content document on a document page, wherein the content document comprises a plurality of content document pages;
acquiring (S102) target position information of recommendation information to be processed in the content document, wherein the target position information is determined based on a statistical analysis result of display durations of the content document pages; and
processing (S103) the recommendation information to be processed on the document page based on the target position information, wherein the processing comprises displaying or issuing a recommendation request.

2. The method according to claim 1, wherein the recommendation information to be processed comprises: optional display recommendation information or mandatory display recommendation information.

3. The method according to claim 1, wherein an approach for determining the target position information comprises:
acquiring (S201) the statistical analysis result of the display durations of the content document pages and position information of the recommendation information to be processed in the content document;
acquiring (S202) a total display duration of displayed content document pages, wherein the displayed content document pages are content document pages between a current content document page and a document page corresponding to position information of the last recommendation information;
determining (S203) a total display duration threshold condition based on a size relationship between the statistical analysis result and a statistical threshold; and
adjusting (S204) the position information of the recommendation information to be processed in the content document based on a relationship between the total display duration and the total display duration threshold condition to obtain the target position information.

4. The method according to claim 3, wherein determining the total display duration threshold condition based on the size relationship between the statistical analysis result and the statistical threshold comprises:
in response to the statistical analysis result being greater than a first statistical threshold, determining the total display duration threshold condition to be a first total display duration threshold condition; and
in response to the statistical analysis result being less than a second statistical threshold, determining the total display duration threshold condition to be a second total display duration threshold condition, wherein the first statistical threshold is greater than the second statistical threshold.

5. The method according to claim 4, wherein adjusting the position information of the recommendation information to be processed in the content document based on the relationship between the total display duration and the total display duration threshold condition to obtain the target position information comprises:
in response to the total display duration satisfying the first total display duration threshold condition, adjusting the position information of the recommendation information to be processed in the content document in a direction close to the current content document page to obtain the target position information; and
in response to the total display duration satisfying the second total display duration threshold condition, adjusting the position information of the recommendation information to be processed in the content document in a direction away from the current content document page to obtain the target position information.

6. The method according to claim 5, wherein in response to the total display duration satisfying the second total display duration threshold condition, adjusting the position information of the recommendation information to be processed in the content document in the direction close to the current content document page to obtain the target position information comprises:
in response to the total display duration satisfying the first total display duration threshold condition, adjusting the position information of the recommendation information to be processed in the content document in the direction close to the current content document page by a preset content document page interval to obtain adjusted position information; and
in response to a first content document page interval between the adjusted position information and the position information of the last recommendation information being less than a first content document page interval threshold, determining position information, which is separated from the position information of the last recommendation information by the first content document page interval threshold, to be the target position information.

7. The method according to claim 5, wherein in response to the total display duration satisfying the second total display duration threshold condition, adjusting the position information of the recommendation information to be processed in the content document in the direction away from the current content document page to obtain the target position information comprises:
in response to the total display duration satisfying the second total display duration threshold condition, acquiring a second content document page interval between the current content document page and the position information of the recommendation information to be processed in the content document; and
in response to the second content document page interval being less than a second content document page interval threshold, adjusting the position information of the recommendation information to be processed in the content document in the direction away from the current content document page by the preset content document page interval to obtain the target position information.

8. The method according to any of claims 3 to 7, wherein processing the recommendation information to be processed on the document page based on the target position information comprises:
in response to the processing being displaying, displaying the recommendation information to be processed in a case wherein the current content document page is located at a document page corresponding to the target position information; and
in response to the processing being issuing the recommendation request, issuing request information for the recommendation information to be processed in a case wherein the current content document page is located at the document page corresponding to the target position information.

9. The method according to claim 8, wherein displaying the recommendation information to be processed comprises:
acquiring a display identifier of the recommendation information to be processed, wherein the display identifier is used to indicate that the recommendation information to be processed is optional display recommendation information or mandatory display recommendation information;
in response to the recommendation information to be processed being the optional display recommendation information, acquiring a first switching request for the current content document page; and
displaying a first content document page corresponding to the first switching request.

10. The method according to claim 8, wherein displaying the recommendation information to be processed further comprises:
in response to the recommendation information to be processed being the mandatory display recommendation information, acquiring a target display duration of the recommendation information to be processed;
displaying the recommendation information to be processed on the current content document page based on the target display duration;
acquiring a second switching request for the current content document page in a case wherein an actual display duration of the recommendation information to be processed is greater than or equal to the target display duration; and
displaying a second content document page corresponding to the second switching request.

11. The method according to claim 8, wherein in response to the processing being displaying, determining the total display duration threshold condition based on the size relationship between the statistical analysis result and the statistical threshold comprises:
acquiring a display identifier of the recommendation information to be processed, wherein the display identifier is used to indicate that the recommendation information to be processed is optional display recommendation information or mandatory display recommendation information;
in response to the statistical analysis result being greater than a first statistical threshold and the recommendation information to be processed being the mandatory display recommendation information, determining the total display duration threshold condition to be a first display duration threshold in a first total display duration threshold condition; and
in response to the statistical analysis result being greater than the first statistical threshold and the recommendation information to be processed being the optional display recommendation information, determining the total display duration threshold condition to be a second display duration threshold in the first total display duration threshold condition, wherein the second display duration threshold is less than the first display duration threshold.

12. A apparatus for processing recommendation information, comprising:
a content document display module (801), configured to display a content document on a document page, wherein the content document comprises a plurality of content document pages;
a target position information acquisition module (802), configured to acquire target position information of recommendation information to be processed in the content document, wherein the target position information is determined based on a statistical analysis result of display durations of the content document pages; and
a recommendation information processing module (803), configured to process the recommendation information to be processed on the document page based on the target position information, wherein the processing comprises displaying or issuing a recommendation request.

13. The apparatus according to claim 12, wherein the recommendation information to be processed comprises: optional display recommendation information or mandatory display recommendation information.

14. An electronic device, comprising:
a memory (20) and a processor (10), wherein the memory and the processor communicate with each other and are connected, computer instructions are stored in the memory, and the processor (10) executes the computer instructions to execute the method for processing recommendation information according to any of claims 1 to 11.

15. A computer-readable storage medium, wherein computer instructions are stored in the computer-readable storage medium, and the computer instructions cause a computer to execute the method for processing recommendation information according to any of claims 1 to 11.
